(19) Europäisches Patentamt
European Patent Office
Office européen des brevets

(11) Veröffentlichungsnummer: **0 008 777**
**A1**

# (12) EUROPÄISCHE PATENTANMELDUNG

(21) Anmeldenummer: 79103217.0

(22) Anmeldetag: 31.08.79

(51) Int. Cl.³: G 11 B 5/72
C 09 D 5/23

(30) Priorität: 11.09.78 DE 2839378

(43) Veröffentlichungstag der Anmeldung:
19.03.80 Patentblatt 80/6

(84) Benannte Vertragsstaaten:
DE FR GB IT

(71) Anmelder: BASF Aktiengesellschaft
Carl-Bosch-Strasse 38
D-6700 Ludwigshafen(DE)

(72) Erfinder: Schaefer, Dieter, Dr.
Hauptstrasse 173
D-6731 Lindenberg(DE)

(72) Erfinder: Motz, Herbert, Dr.
Kinzigstrasse 9
D-7601 Willstaett(DE)

(72) Erfinder: Mayer, Dieter, Dr.
Berner Weg 28
D-6700 Ludwigshafen(DE)

(72) Erfinder: Deigner, Paul, Dr.
In der Leimengrube 7
D-7601 Willstaett(DE)

(72) Erfinder: Hack, Joachim
Pfarrer-Friedrich-Strasse 34
D-6700 Ludwigshafen 299(DE)

(72) Erfinder: Falk, Roland, Dr.
Hohbuehl 51
D-7590 Achern(DE)

## (54) Magnetischer Aufzeichnungsträger.

(57) Die Erfindung betrifft magnetische Aufzeichnungsträger, bestehend aus einem nichtmagnetischen Trägermaterial und einer darauf mindestens einseitig aufgebrachten magnetisierbaren Schicht, die in einem polymeren Bindemittel und Zusatzstoffen feinverteilte magnetische Teilchen enthält, wobei die Oberfläche der magnetisierbaren Schicht mit einem Überzug eines Perfluorpolyätherölgemisches als Schmiermittel versehen ist.

EP 0 008 777 A1

Croydon Printing Company Ltd.

## Magnetischer Aufzeichnungsträger

Die Erfindung betrifft magnetische Aufzeichnungsträger, bestehend aus einem nichtmagnetischen Trägermaterial und einer darauf haftfest aufgebrachten Magnetschicht, wobei die Oberfläche der Magnetschicht eine dünne Schmierschicht eines Perfluorpolyätheröles trägt.

Magnetische Aufzeichnungsträger, wie Magnetbänder für Computer-, Video- und Audio-Anwendung sowie magnetische Speicherplatten, deren Anwendung in der Datenverarbeitung weit verbreitet sind, werden bei der Anwendung über längere Zeiträume erhebliche Abnutzung durch Berührung mit Geräteteilen ausgesetzt. So werden beispielsweise Magnetspeicherplatten in modernen Datenverarbeitungsanlagen mit Drehzahlen bis zu 3600 UpM betrieben. Die Magnetköpfe schweben in niedrigem Abstand über der Plattenoberfläche auf einem Luftkissen, das durch die Drehbewegung der Platte und der acrodynamischen Form der Magnetköpfe entsteht. Der Abstand zwischen Magnetschichtoberfläche und Magnetkopf kann dabei bis zu nur 0,5 $\mu$m betragen. Bei diesen geringen Abständen können mikroskopische Fremdpartikel, wie Staub oder geringste Schichtunebenheiten bereits den Flug des Magnetkopfes so stören, daß es zu einer Berührung zwischen Kopf und Platte kommt. Die Folge davon kann Datenverlust oder Beschädigung der Magnetplatte sein. Dadurch entstehende Ablagerungen von

Sob/ro

Schichtmaterial an Kopf-und Plattenoberfläche führen infolge gestörten Flugverhaltens leicht zum "head crash", der zur Zerstörung des Magnetkopfes und zum Unbrauchbarwerden des Magnetplattenstapels führen kann. An die Datenschicht von Magnetplatten, die im allgemeinen wegen der erforderlichen hohen Auflösung Dicken zwischen 1,0 und 2,0 µm aufweisen, werden daher ebenfalls hohe Forderungen an die mechanische Widerstandsfähigkeit gestellt.

Im Falle von flexiblem Magnetscheiben, die ebenfalls in der peripheren Datenverarbeitung, vorwiegend als Kleinspeicher in Datenerfassungsgeräten eingesetzt werden, wird der Magnetkopf an die rotierende Scheibe gepreßt, wodurch der Widerstand der Magnetschicht gegen Verschleiß besonders hoch sein muß.

Die Betriebssicherheit von Tonaufzeichnungsbändern, wie Heimtonbänder und Kassettenbändern, hängt im hohen Ausmaß von der Abriebfestigkeit der Magnetschicht auch unter extrem ungünstigen klimatischen Verhältnissen, wie hoher Temperatur und hoher Luftfeuchtigkeit, ferner unter ungünstigen Gerätebedingungen, wie beispielsweise an Geräten, deren bandberührende Teile infolge starker Abnutzung sehr abrasiv auf die Bandoberfläche wirken können, ab. Bänder mit ungenügender Abriebfestigkeit, die unter ungünstigen Bedingungen betrieben werden, erfordern einen ständigen Reinigungsaufwand der verschmutzten Geräteteile.

Der Zusatz von Gleitmitteln wie Fettsäure, Fettsäureester und Fettsäureamide, natürliche und syntetische Kohlenwasserstoffe, Silikonöle, feste Schmierstoffe, wie Graphit oder Molybdändisulfid, führt in der Regel nicht zu der gewünschten Verbesserung des Verschleißverhaltens. Auch ist es bekannt, bei magnetischen Datenplatten, der

Magnetschicht zur Verbesserung des Verschleißverhaltens kleinste, harte, abrasive Partikel, bestehend aus Korund, Karborundum, Quarzmehl und ähnlichem, zuzusetzen. Nachteilig daran ist, daß der Magnetkopf bei Berührung mit der Magnetschicht seinerseits starkem Verschleiß ausgesetzt wird. Ein sicherer Schutz der Magnetschichtoberfläche ist außerdem durch dieses Verfahren nicht gewährleistet.

Eine deutliche Verbesserung gegenüber der genannten Art der Schmierung stellt die in US-PS 3 778 308 genannte Oberflächenbehandlung der Magnetträger mit Perfluoräthylpolyäthern und Perfluorisopropyläthern dar, wenngleich dieses Verfahren ebenfalls noch nicht allen Anforderungen genügt. Das Langzeitverhalten dieser Schmierstoffe ist nicht zufriedenstellend, der Schmiereffekt nimmt, vermutlich infolge einer gewissen Flüchtigkeit der Verbindung oder infolge Eindiffundierens in die Magnetschicht bei längerer Benutzungsdauer ab. Um eine ausreichende Schmierwirkung zu erzielen, müssen relativ große Mengen dieses Schmiermittels auf die Oberfläche aufgetragen werden, was infolge Tröpfchenbildung des Schmierfilms zu drop-out-Fehlern führen kann.

Der Erfindung liegt damit die Aufgabe zugrunde, magnetische Aufzeichnungsträger bereitzustellen, welche auf der magnetisierbaren Schicht Schmiermittel enthalten, die bereits in geringsten Mengen aufgebracht, eine zeitlich gleichbleibende Verringerung des mechanischen Verschleißes der Magnetschicht ergeben.

Es wurde nun gefunden, daß magnetische Aufzeichnungsträger, bestehend aus einem nichtmagnetischen Trägermaterial, einer darauf mindestens einseitig aufgebrachten magnetisierbaren Schicht, die in einem polymeren

Bindemittel und Zusatzstoffen feinverteilte magnetische Teilchen enthält und einem Überzug eines Schmiermittels auf der Oberfläche der Magnetschicht die geforderten Eigenschaften besitzen, wenn der Überzug aus mindestens einem Perfluorpolyätherölgemisch aus der Gruppe bestehend aus

a) einem Perfluorpolyätherölgemisch der allgemeinen Formel

$$A-O-(C_3F_6O)_m-(CF_2O)_n-(\underset{CF_3}{CF}-O)_q-B \qquad (1)$$

worin
m = eine ganze Zahl von 15 bis 100,
n = eine ganze Zahl von 1 bis 80,
q = eine ganze Zahl von 1 bis 9, die Summe (m + n + q) = eine Zahl von 17 bis 100, das Verhältnis n/m+q = eine Zahl von 0,06 bis 1, $-C_3F_6O-$, $-\underset{CF_3}{CF_2}O-$ und $-CF_2-O-$ für statistisch über die Kette verteilte Oxyperfluoralkyleneinheiten stehen und A und B gleiche oder verschiedene Gruppen, ausgewählt aus $-CF_3$, $-C_2F_5$ und $-C_3F_7$, bedeuten,
und

b) einem Perfluorpolyätherölgemisch der allgemeinen Formel

$$A-O-(C_2F_4O)_p-(CF_2O)_r-B \qquad (2)$$

worin
p = eine ganze Zahl von 30 bis 300,
r = eine ganze Zahl von 5 bis 300,
die Summe (p + r) = eine Zahl von 35 bis 600, das

Verhältnis r/p = eine Zahl von 0,15 bis 1,5, $-C_2F_4O-$ und $-CF_2O-$ für statistisch über die Kette verteilte Oxyperfluoralkyleneinheiten stehen sind und A und B $-CF_3$ oder $-C_2F_5$ bedeuten,

in einer Menge von 1 bis 300 $mg/m^2$ gebildet ist.

Bei den bevorzugt eingesetzten Perfluorpolyätherölgemischen der Formel (1) bedeuten

m = eine ganze Zahl von 15 bis 70, insbesondere von 30 bis 60,

n = eine ganze Zahl von 5 bis 40, insbesondere von 10 bis 30,

q = eine ganze Zahl von 3 bis 9,

die Summe (m + n + q) = eine Zahl von 23 bis 119, das Verhältnis n/m+q = eine Zahl von 0,28 bis 0,50, $-C_3F_6O-$, $-CF_2O-$ und $-\underset{CF_3}{\underset{|}{C}}F-O-$ für statistisch über die Kette verteilte Oxyperfluoralkyleneinheiten stehen und A und B gleiche oder verschiedene Gruppen, ausgewählt aus $-CF_3$, $-C_2F_5$ und $-C_3F_7$,

und in der Formel (2)

p = eine ganze Zahl von 35 bis 250,

r = eine ganze Zahl von 6 bis 250,

die Summe (p + r) = eine Zahl von 41 bis 500, das Verhältnis r/p = eine Zahl von 0,15 bis 1,5, $-C_2F_4O-$ und $-CF_2O-$ für statistisch über die Kette verteilte Oxyperfluoralkyleneinheiten stehen und A und B $-CF_3$ oder $-C_2F_5$ bedeuten.

Diese die Widerstandsfestigkeit von Aufzeichnungsträgern gegen Verschleiß in überraschenderweise verbessernden Verbindungen sind aus der DE-OS 2 633 736 bekant, ebenso wie

ihre Herstellung. Sie werden derzeit auf dem Gebiet der Vakuum- und Kältetechnik bei extrem niedrigen Temperaturen und Restdrücken von unter $10^{-7}$ Torr als Motorflüssigkeiten, Verschlußmittel und Schmiermittel für Vakuumdiffusionspumpen eingesetzt.

Die verbesserte Verschleißfestigkeit von Aufzeichnungsträgern mit einer Überzugsschicht der beschriebenen Perfluorpolyätherölgemischen zeigt sich bei den verschiedenen Anwendungsarten dieser Medien. So läßt sich der gemäß Aufgabe angestrebte Erfolg sowohl bei flexiblen Aufzeichnungsträgern wie Magnetbändern und Datenscheiben in der als "diskette" bezeichneten Art, als auch bei starren Magnetspeicherplatten, den sogenannten "disks", erreichen. Dabei hat sich bei den flexiblen Aufzeichnungsträgern eine Menge zwischen 30 und 300, vorzugsweise zwischen 100 und 200 $mg/m^2$ Oberfläche als zweckmäßig herausgestellt, während bei den starren Magnetspeicherplatten schon Mengen zwischen 1 und 20, vorzugsweise zwischen 2 und 15 $mg/m^2$ Schichtfläche genügen. Das Aufbringen der Perfluor-poly-ätherölgemische geschieht durch Tauchverfahren, Aufsprühen oder Auftragen mit Lappen oder Bürste. Vorzugsweise wird zum Aufbringen dieser Verbindungen auf die Magnetschicht eine Lösung in Trifluortrichloräthan verwendet.

Die erfindungsgemäßen magnetischen Aufzeichnungsträger zeichnen sich durch eine auffallende Verringerung des mechanischen Verschleißes der Magnetschicht aus. Bei allen üblichen Tests zur Lebensdauer der magnetischen Aufzeichnungsträgern ergeben sich überraschend günstige Resultate, die auch über längere Zeiträume hinweg erhalten bleiben, was sich sowohl in Alterungstests als auch in der Anwendung über längere Zeiträume offenbart. Gegenüber solchen nach dem nächstkommenden Stand der Technik mit Überzügen von Perfluoralkylpolyäthern zeichnen sie sich bei geringen

erforderlichen Auftragsmengen durch eine geringe Zunahme von drop-out-Feldern und einem schwächeren Absinken der Lebensdauer nach Alterung aus.

Die Erfindung sei anhand folgender Beispiele näher erläutert.

Beispiel 1

Eine flexible Datenscheibe mit einer dem Stand der Technik entsprechenden Magnetschicht wurde einer drop-out-Prüfung unterzogen. Anschließend wurde die Scheibe durch Eintauchen in eine 1,5 %ige Lösung einer Verbindung der Formel

$$CF_3-O-(C_3F_6O)_m-(CF_2-O)_n-(\underset{\displaystyle CF_3}{CF}-O)_q\ CF_3$$

m: 30
n: 10
q: 5

und einem Molekulargewicht von 8000, in Trifluortrichloräthan und durch anschließendes Abschleudern der überschüssigen Lösung mit einer Menge von 140 $mg/m^2$ überschichtet. Im Anschluß an die Nachbehandlung wurde der drop-out-Test wiederholt und ein Lebensdauertest vorgenommen. Der drop-out-Test und der Lebensdauertest wurden auf einem handelsüblichen Laufwerk ausgeführt. Beim drop-out-Test wurde die Veränderung der drop-outs vor und nach der Überschichtung, beim Lebensdauertest die Anzahl der Umdrehungen der Scheibe bei Kontakt mit dem Magnetkopf bis zum Auftreten von Fehlern infolge Verschleißerscheinungen bewertet. Der Magnetkopf wurde dabei stets in derselben Position an einer der äußeren Spuren belassen.

Der Verschleißtest wurde an "disketten" der gleichen Charge wiederholt, die, um den Effekt einer Alterung vorwegzunehmen, 60 Tage bei 55°C gelagert worden waren.

Die Ergebnisse der Prüfungen sind in Tabelle 1 enthalten.

Beispiel 2

Es wurde wie in Beispiel 1 verfahren, jedoch zur Überschichtung eine Verbindung der Formel

$$CF_3-O-(C_3F_6O)_m-(CF_2-O)_n-(\underset{CF_3}{CF}-O)_q-CF_3$$

m: 60
n: 30
q: 8

mit einem Molgewicht von 15.500 verwendet.
Die Auftragsmenge betrug 160 mg/m² Schichtoberfläche.
Die Testergebnisse sind in Tabelle 1 angegeben.

Beispiel 3

Es wurde wie in Beispiel 1 verfahren, jedoch wurde zur Überschichtung eine Verbindung der Formel

$$CF_3-O-(C_2F_4O)_p-(CF_2O)_r-CF_3$$

p: 80
r:. 70

mit einem Molekulargewicht von 1500 verwendet.
Die Auftragsmenge betrug 140 mg/m² Schichtoberfläche.
Die Testergebnisse sind in Tabelle 1 aufgeführt.

Beispiel 4

Es wurde wie in Beispiel 1 verfahren, jedoch wurde zur Überschichtung eine Verbindung der Formel

$$CF_3-O\ (C_2F_4O)_p\ -(CF_2O)_r-CF_3$$

p: 150
r: 80

und einem Molekulargewicht von 23.000 verwendet. Die Auftragsmenge betrug 160 mg/m$^2$ Schichtoberfläche. Die Testergebnisse sind in Tabelle 1 angegeben.

Vergleichsversuch A

Eine flexible Magnetscheibe aus der gleichen Herstellungscharge, wie in den Beispielen 1-4 wurde ohne Nachbehandlung den gleichen Prüfungen wie in Beispiel 1 angegeben, unterzogen, die Prüfergebnisse sind in Tabelle 1 enthalten.

Vergleichsversuch B

Es wurde wie in Beispiel 1 verfahren, jedoch wurde anstelle der Perfluorpolyätherölgemische ein Perfluorisopropylpolyäther mit einem Molekulargewicht von etwa 2100 zur Nachbehandlung verwendet. Die Auftragsmenge betrug 140 mg/m$^2$. Die Prüfung erfolgte wie in Beispiel 1 angegeben, die Ergebnisse sind in Tabelle 1 enthalten.

Vergleichsversuch C

Es wurde wie im Vergleichsversuch B verfahren, jedoch betrug die Auftragsmenge 210 mg/m$^2$. Die Prüfung erfolgte wie in Beispiel 1 beschrieben, die Ergebnisse sind in Tabelle 1 angeführt.

Tabelle 1

| Versuch | Zahl der drop-outs vor Überschichtung | Zahl der drop-outs nach Überschichtung | Zahl der Umdrehungen bis zum Auftreten von Fehlern vor Alterung | Zahl der Umdrehungen bis zum Auftreten von Fehlern nach Alterung |
|---|---|---|---|---|
| Beispiel 1 | 2 | 2 | $> 10 \cdot 10^6$ | $> 10 \cdot 10^6$ |
| Beispiel 2 | 0 | 0 | $7{,}5 \cdot 10^6$ | $7 \cdot 10^6$ |
| Beispiel 3 | 0 | 0 | $> 10 \cdot 10^6$ | $9{,}4 \cdot 10^6$ |
| Beispiel 4 | 1 | 2 | $6{,}3 \cdot 10^6$ | $7{,}0 \cdot 10^6$ |
| Vergleichsvers. A | 0 | 0 | $0{,}2 \cdot 10^6$ | $0{,}4 \cdot 10^6$ |
| Vergleichsvers. B | 0 | 2 | $2{,}9 \cdot 10^6$ | $2{,}2 \cdot 10^6$ |
| Vergleichsvers. C | 0 | 16 | $9{,}8 \cdot 10^6$ | $7{,}8 \cdot 10^6$ |

Beispiel 5

Auf eine 14 Zoll Magnetspeicherplatte mit einer dem Stand der Technik entsprechenden Magnetschicht von 1,7 µm Stärke am Außenrand, wurde ein Perfluorpolyätheröl, wie in Beispiel 1 beschrieben, in einer Menge von 5 $mg/m^2$ Schichtoberfläche aufgebracht. Der Auftrag erfolgte mittels eines Tuches, das mit einer 0,02 %igen Lösung der Verbindung in Trichlortrifluoräthan getränkt war.

Zur Prüfung der Verschleißfestigkeit wurde die Magnetplatte dem Keramik-Pin-Test unterzogen. Bei diesem Test wird ein ballig geschliffener Keramikkörper (Pin) unter Druck auf eine sich drehende Magnetplatte aufgesetzt. Dadurch wird die Schicht auf dieser Spur mechanisch sehr stark beansprucht. Die Zeit bis zur Verletzung der Magnetschicht wird als Verschleißfestigkeitsstandzeit bezeichnet. Je größer die Zeitspanne vom Aufsetzen des Keramik-Pins bis zur Zerstörung der Schicht ist, umso höher ist die Verschleißfestigkeit. Die beginnende Zerstörung der Schicht ist als deutliche Schwingungsänderung des Keramikpins über nachgeschaltete Verstärker nachweisbar.

Bei dieser Prüfanordnung betrugen der Anpreßdruck des Pins gegen die Plattenoberfläche 80 pond, die Drehzahl der rotierenden Scheibe 100 UpM und der Radius des ballig geschliffenen Pins 5 µm.

Die Verschleißprüfung wird an den Platten, die nach der Überschichtung durch 60-tägige Lagerung bei 60°C gealtert worden sind, wiederholt.

Ein weiterer Test, mit dem neben der Oberflächenqualität von Magnetplatten vor allem der Magnetkopfverschleiß gemessen werden kann, ist der Ferrit-Pin-Test. In diesem

Fall besteht der Pin aus demselben Material, welches zur Herstellung von Magnetköpfen verwendet wird. Der Ferrit-Pin wird vor dem Gebrauch ballig auf einen Radius von 5 /um geschliffen, damit der Ferrit bei Versuchsbeginn punktförmig auf der Plattenoberfläche aufsitzt. Der Andruck des Pins auf die Plattenoberfläche wird mittels Federspannung auf 60 pond eingestellt. Bei dem Test wird die Platte mit 100 UpM gedreht und der Ferrit-Pin wird dabei radial zur Plattenmitte 60 mal je Minute auf einer Länge von 30 mm hin- und herbewegt. Nach 8000 Plattenumdrehungen wird der größte Durchmesser des Abschliffes der Pinschleiffläche gemessen.

Auch bei diesem Test wurde die gleiche Messung an einer Magnetplatte, die nach Auftragen der Perfluorpolyätheröl-gemische einem 60-tägigen Alterungstest bei 60°C unterworfen worden war, wiederholt.
Die Prüfergebnisse sind in den Tabellen 2 und 3 aufgeführt.

Beispiel 6

Es wird wie in Beispiel 5 verfahren, jedoch wird das Perfluorpolyätheröl aus Beispiel 3 verwendet. Die Auftragsmenge beträgt 2,5 mg/$m^2$ Schichtoberfläche, die Ergebnisse sind in den Tabellen 2 und 3 wiedergegeben.

Vergleichsversuch D

Eine Magnetspeicherplatte wird ohne Nachbehandlung den gleichen Test wie in Beispiel 5 beschrieben, unterzogen. Die Ergebnisse finden sich in den Tabellen 2 und 3.

Vergleichsversuch E

Es wird wie in Beispiel 5 verfahren, jedoch wird hierbei ein Perfluorisopropolyäther mit einem Mol-Gewicht von 2100 verwendet. Die Auftragsmenge beträgt 6 $mg/m^2$ Schichtoberfläche. Die Testergebnisse sind in den Tabellen 2 und 3 angegeben.

Tabelle 2

Verschleißfestigkeit der Magnetschicht

| Versuch | Verschleißfestigkeitsstandzeit [Sekunden] | |
| --- | --- | --- |
| | Vor Alterung | Nach Alterung |
| Beispiel 5 | $6,5 \times 10^4$ | $5,0 \times 10^4$ |
| Beispiel 6 | $3,8 \times 10^4$ | $4,1 \times 10^4$ |
| Vergleichsversuch D | 130 | 130 |
| Vergleichsversuch E | $4,5 \times 10^3$ | $8,3 \times 10^2$ |

Tabelle 3

Magnetkopfverschleiß

| Versuch | Durchmesser der Pin-Schleiffläche [/um] | |
| --- | --- | --- |
| | Vor Alterung | Nach Alterung |
| Beispiel 5 | 380 | 400 |
| Beispiel 6 | 330 | 345 |
| Vergleichsversuch D | 2000 | 2000 |
| Vergleichsversuch E | 850 | 1230 |

Patentanspruch

Magnetischer Aufzeichnungsträger, bestehend aus einem nichtmagnetischen Trägermaterial, einer darauf mindestens einseitig aufgebrachten magnetisierbaren Schicht, die in einem polymeren Bindemittel und Zusatzstoffen feinverteilte magnetische Teilchen enthält und einem Überzug eines Schmiermittels auf der Oberfläche der Magnetschicht, dadurch gekennzeichnet, daß der Überzug aus mindestens einem Perfluorpolyätherölgemisch aus der Gruppe bestehend aus

a) einem Perfluorpolyätherölgemisch der allgemeinen Formel

$$A-O-(C_3F_6O)_m-(CF_2O)_n-(\underset{CF_3}{CF}-O)_q-B \qquad (1)$$

worin
m = eine ganze Zahl von 15 bis 100,
n = eine ganze Zahl von 1 bis 80,
q = eine ganze Zahl von 1 bis 9, die Summe (m + n + q) = eine Zahl von 17 bis 100, das Verhältnis n/m+q = eine Zahl von 0,06 bis 1, $-C_3F_6O-$, $-\underset{CF_3}{CF_2}O-$ und $-CF_2-O-$ für statistisch über die Kette verteilte Oxyperfluoralkyleneinheiten stehen und A und B gleiche oder verschiedene Gruppen, ausgewählt aus $-CF_3$, $-C_2F_5$ und $-C_3F_7$, bedeuten,
und

b) einen Perfluorpolyätherolgemisch der allgemeinen Formel

$$A-O-(C_2F_4O)_p-(CF_2O)_r-B \qquad (2)$$

worin
p = eine ganze Zahl von 30 bis 300,
r = eine ganze Zahl von 5 bis 300,
die Summe (p + r) = eine Zahl von 35 bis 600, das Verhältnis r/p = eine Zahl von 0,15 bis 1,5, $-C_2F_4O-$ und $-CF_2O-$ für statistisch über die Kette verteilte Oxyperfluoralkyleneinheiten stehen sind A und B $-CF_3$ oder $-C_2F_5$ bedeuten,

in einer Menge von 1 bis 300 $mg/m^2$ gebildet ist.

0008777

Europäisches Patentamt

# EUROPÄISCHER RECHERCHENBERICHT

Nummer der Anmeldung

EP 79 103 217.0

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| D | DE - A1 - 2 633 736 (MONTEDISON S.P.A.)<br>* Anspruch 1 *<br>-- | 1 | G 11 B 5/72<br>C 09 D 5/23 |
| A | DE - B2 - 1 817 826 (MONTECATINI EDISON S.P.A.)<br>* Anspruch, Spalte 9, Zeilen 60 bis 65 *<br>---- | | |
| | | | RECHERCHIERTE SACHGEBIETE (Int. Cl.3) |
| | | | C 08 G 65/32<br>C 09 D 5/23<br>G 11 B 5/00 |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Berlin | 22-11-1979 | LEITHÄUSER |